# EUROPEAN PATENT APPLICATION

(11) **EP 2 169 811 A1**
(43) Date of publication of application: **31.03.2010**
(21) Application number: 08305589.7
(22) Date of filing: 25.09.2008
(51) Int. Cl.: H02K 5/14

(54) **Brush holder, and electric motor, electric generator or the like**

(71) Applicant: Dunkermotoren GmbH, 79848 Bonndorf (DE)
(72) Inventor: Fechtig, Helmut, 79848, Bonndorf-Wellendingen (DE); Zimmermann, Stefan, 79848, Bonndorf-Gündelwangen (DE)
(74) Representative: Dreiss

(57) **Abstract**

The invention relates to a brush holder (BH) for a brushed electric motor (M), electric generator or the like, with at least two ducts (DC) for receiving a brush each and with a spring (SP) for each duct for pressing the related brush on to a collector (C), in which each duct (DC) carries a stop (ST) for clamping an inserted and pre-assembled brush against the pressure of the related spring (SP) until after the insertion of the collector. The invention also relates to an electric motor (M), electric generator or the like.

## Description

The invention relates to a brush holder for a brushed electric motor, electric generator or the like according to the preamble of claim 1, and to an electric motor, electric generator or the like.

In modern production of electric motors, especially small electric motors, the motors are assembled in pre-assembling and final assembling stages. Pre-assembled units often are common to more than one kind of final assembled motors and sometimes are pre-assembled in a factory different from that where the final assembly takes place or at least in different parts of such factory.

Typical units that are separately pre-assembled and only later final assembled are a brush holder together with the respective brushes and springs on the one hand and the rotor with the collector on the other hand. The brushes than have to be kept in a preliminary position until both such units have been combined.

It is known to use the springs to first hold the brushes in the preliminary position and only after final assembly to press the brushes towards the collector. After freeing the springs they have to automatically move to their final position in a gliding manner. The brush holders often are cast parts and from manufacture there remain burrs. In mass production debarring of such parts is unusual. When the glide paths to be taken by the springs on their move to the final position carry burrs, such gliding is stopped and the motor will work only for a short time, sometimes just until the end of the final inspection.

The same problems of course arise in any situation where electric contacts need to connect fixed and rotating parts. Especially electric generators or ring wheels for continuous connections are mentioned.

The object of the invention therefor is to overcome the above-mentioned problem.

This problem according to the invention is solved by a brush holder according to the teaching of claim 1, and an electric motor, electric generator or the like according to the teachings of claim 5.

The idea is to bring the springs into the final positions relative to the brushes already during pre-assembling of the brush holders and to instead stop the brushes from reaching their final positions before the final assembly.

Further embodiments of the invention are to be round in the subclaims and in the accompanying description.

In the following the invention will be described with the aid of the accompanying drawing, in which
- Figure 1: shows two preassembled units for an electric motor according to the invention, one of the units being a brush holder according to the invention.
- Figure 2: shows the two preassembled units of figure 1 after their final assembly.

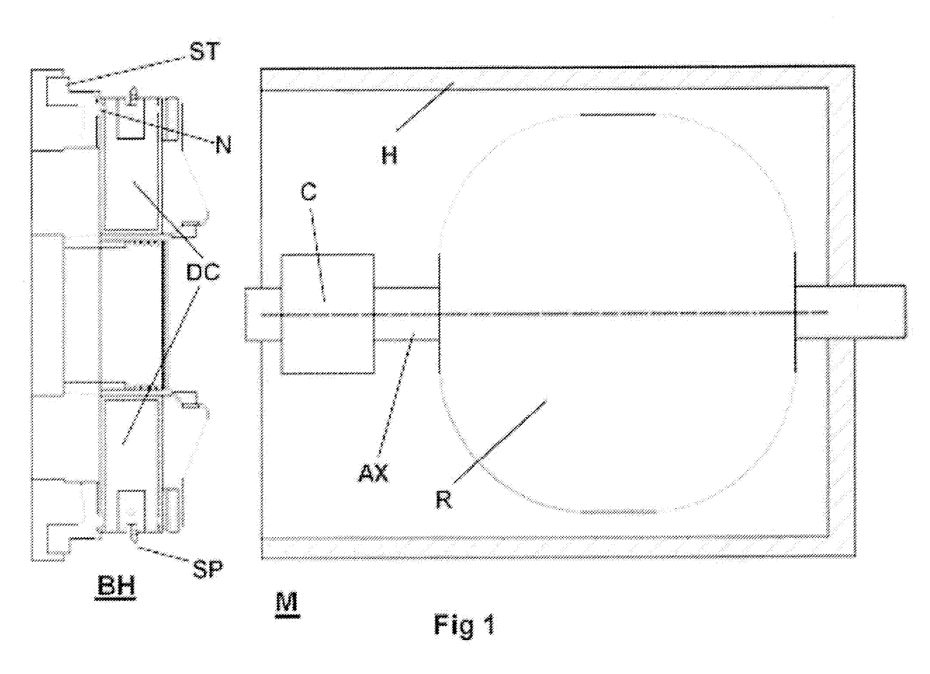

Figure 1 shows two preassembled units for an electric motor M according to the invention, one of the units being a brush holder BH according to the invention.

One preassembled unit mainly includes a housing part H, an axle AX with a rotor R and a collector C.

The brush holder BH shows two ducts DC for receiving a brush each. From the bottom as well as from the top a spring SP is applying on the respective brush, when inserted.

Now according to the invention a stop ST is applied to each duct DC such that it hinders a brush from gliding within the duct DC.

Mostly, and this is the case also in this example, a small brushed electric motor has two brushes, and consequently two ducts and two springs. The springs for both brushes of course could be made also one single common element. The same applies to the stops according to the invention.

In this example the stops are elastic parts with a nose N each to extend into the respective duct near the outer end. Especially when the brushes carry matching notches, these noses will ensure that the brushes will stay in the preliminary position until the stops are operated to release them.

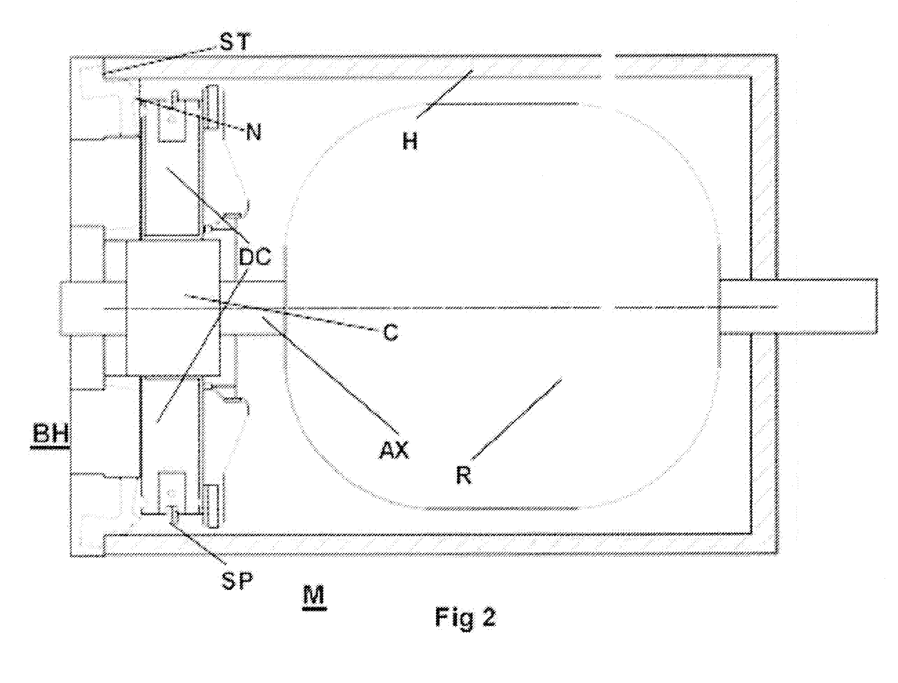

As shown in figure 2 such operating is caused when the other preassembled part with housing H and Rotor R is assembled together with the unit preassembled as brush holder BH. The housing than pushes away the stops ST such that the noses N no longer extend into the ducts DC, thus no longer hinder the springs SP to press the brushes towards the collector C.

Stops with noses or the like near the inner ends of the ducts could also be used and released by a push of the axle, when being inserted.

Also releasing the stops by a specific tool could be encountered, if an automatic release is not desirable.

It is to be mentioned that both, the brush holder with or without reassembled brushes, might be preassembled separately and than shipped to the manufacturer of the motors for final assembly.

## Claims

1. Brush holder (BH) for a brushed electric motor (M), electric generator or the like, with at least two duets (DC) for receiving a brush each and with a spring (SP) for each duct (DC) for pressing the related brush on to a collector (C), **characterized in, that** each duct (DC) carries a stop (ST) for clamping an inserted and pre-assembled brush against the pressure of the related spring (SP) until after the insertion of the collector (C).

2. Brush holder (BH) according to claim 1, **characterized in, that** each stop (ST) is elastic and made such that on insertion, pulling over or the like of an other part (H) of the electric motor (M) or the like it will release and thus activate the spring (SP).

3. Brush holder (BH) according to claim 2, **characterized in, that** the stop (ST) is made such that on pulling over a housing (H) it is released.

4. Brush holder according to claim 1, **characterized in, that** in each duct (DC) a brush is inserted and the relating spring (SP) is put on.

5. Electric motor (M) electric generator or the like with a brush holder according to claim 1.
